# EUROPÄISCHE PATENTANMELDUNG

(11) **EP 4 331 808 A1**
(43) Veröffentlichungstag der Anmeldung: **06.03.2024**
(21) Anmeldenummer: 22193696.6
(22) Anmeldetag: 02.09.2022
(51) Int. Cl.: B29C 48/685, B29C 48/36, B29C 48/68, B29C 48/02

(54) **SCHNECKENEXTRUDER ZUR GRANULATVERARBEITUNG**

(71) Anmelder: Brabender GmbH & Co. KG, 47055 Duisburg (DE)
(72) Erfinder: Tauselt, Andreas, 40229 Düsseldorf (DE); Polzin, Sven, 47443 Moers (DE)
(74) Vertreter: Michalski Hüttermann & Partner Patentanwälte mbB

(57) **Zusammenfassung**

Die vorliegende Erfindung betrifft einen Schneckenextruder (1) zum Extrudieren eines ersten Ausgangsstoffs, aufweisend eine in einem Gehäuse (2) ausgebildete Kavität (8), zumindest eine in der Kavität (8) angeordnete Extruderschnecke, eine an einem vorderen Ende (E.1) der Kavität (8) angeordnete erste Einlassöffnung (11.1) zum Einfüllen des zu extrudierenden ersten Ausgangsstoffs in die Kavität (8) und eine an einem hinteren Ende (E.2) der Kavität (8) angeordnete Extrusionsöffnung (13), wobei die Kavität (8) die zumindest eine Extruderschnecke in der Umfangsrichtung (U) im Wesentlichen umschließt, sodass zwischen der zumindest einen Extruderschnecke und dem Gehäuse (2) ein sich radial erstreckender Spalt ausgebildet ist und wobei der Spalt in einem sich von der ersten Einlassöffnung (11.1) erstreckenden ersten Längenbereich (L.1) der Kavität (8) eine Verjüngung aufweist. Die Erfindung betrifft weiterhin ein Gehäuse (2) für einen solchen Schneckenextruder (1).

## Beschreibung

### Technisches Gebiet

Die vorliegende Erfindung betrifft einen Schneckenextruder zum Extrudieren eines Ausgangsstoffs, aufweisend eine in einem Gehäuse ausgebildete Kavität und zumindest eine in der Kavität angeordnete Extruderschnecke. Die Erfindung betrifft weiterhin ein Gehäuse für einen solchen Schneckenextruder.

### Hintergrund der Erfindung

Schneckenextruder sind aus dem Stand der Technik bekannt und werden beispielsweise für pharmazeutische Produkte, für Komponenten bei der Herstellung von Pharmazeutika oder in der Kunststoffverarbeitung zum Extrudieren von Profilen oder dergleichen eingesetzt. Dabei weisen die Schneckenextruder im Querschnitt kreisrunde Kavitäten auf, in denen Extruderschnecken angeordnet sind und den Ausgangstoff in der Längsrichtung der Kavität hin zu einer Extrusionsöffnung fördern. Die Extruderschnecken sind dabei um einen Spalt von der Innenwandung der Kavität beabstandet. Entlang der Längenerstreckung der Kavität sind üblicherweise Heizmittel vorgesehen, mittels denen beispielsweise ein eingangsseitig fest vorliegender Ausgangsstoff aufgeschmolzen werden kann.

Nachteilig bei derartigen Schneckenextrudern können lediglich Feststoffpartikel verarbeiten werden, die in einem bestimmten Größenverhältnis zu den Geometrien des Schneckenextruders, beispielsweise dem Außendurchmesser der Extruderschnecke oder der radialen Erstreckung des Spalts zwischen Extruderschnecke und Kavität stehen. So sind beispielsweise bei sehr kleinen Geometrien des Schneckenextruders, wie sie bei Laboranlagen oder in der Pharmazie verwendet werden und bei denen beispielsweise der Außendurchmesser der Extruderschnecken nur weniger Millimeter beträgt, die Ausgangsstoffe lediglich pulverförmig verarbeitbar. Ausgangsstoffe liegen jedoch oft nicht in der entsprechenden Partikelgröße vor und müssen dann aufwändig vorzerkleinert werden.

Ein Schneckenextruder für pharmazeutische Produkte oder für Komponenten bei der Herstellung von Pharmazeutika ist beispielsweise aus DE 10 2010 052 208 A1 bekannt.

### Beschreibung der Erfindung

Ausgehend von dieser Situation ist es eine Aufgabe der vorliegenden Erfindung, einen Schneckenextruder vorzuschlagen, der relativ zu seinen geometrischen Abmessungen möglichst große Feststoffpartikel verarbeiten kann.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Nachfolgend werden Vorteile der beanspruchten Erfindungsaspekte erläutert und weiter nachfolgend bevorzugte modifizierte Ausführungsformen der Erfindungsaspekte beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Soweit Elemente mit Hilfe einer Nummerierung bezeichnet sind, also beispielsweise "erstes Element", "zweites Element" und "drittes Element", so ist diese Nummerierung rein zur Differenzierung in der Bezeichnung vorgesehen und stellt keine Abhängigkeit der Elemente voneinander oder eine zwingende Reihenfolge der Elemente dar. Das heißt insbesondere, dass beispielsweise ein eine Vorrichtung oder ein Verfahren nicht ein "erstes Element" aufweisen muss, um ein "zweites Element" aufweisen zu können. Auch kann die Vorrichtung bzw. das Verfahren ein "erstes Element", sowie ein "drittes Element" aufweisen, ohne aber zwangsläufig ein "zweites Element" aufzuweisen. Es können auch mehrere Einheiten eines Elements einer einzelnen Nummerierung vorgesehen sein, also beispielsweise mehrere "erste Elemente".

Nach einem ersten Aspekt der Erfindung wird die Aufgabe gelöst durch einen Schneckenextruder zum Extrudieren eines ersten Ausgangsstoffs, aufweisend eine in einem Gehäuse ausgebildete Kavität, zumindest eine in der Kavität angeordnete Extruderschnecke, eine an einem vorderen Ende der Kavität angeordnete erste Einlassöffnung zum Einfüllen des zu extrudierenden ersten Ausgangsstoffs in die Kavität und eine an einem hinteren Ende der Kavität angeordnete Extrusionsöffnung, wobei die Kavität die zumindest eine Extruderschnecke in der Umfangsrichtung im Wesentlichen umschließt, sodass zwischen der zumindest einen Extruderschnecke und dem Gehäuse ein sich radial erstreckender Spalt ausgebildet ist und wobei der Spalt in einem sich von der ersten Einlassöffnung erstreckenden ersten Längenbereich der Kavität eine Verjüngung aufweist.

Ein Schneckenextruder wird im Sinne der vorliegenden Offenbarung derart verstanden, dass sich darin eine Extruderschnecke oder mehrere parallele Extruderschnecken jeweils durch einen als Kavität bezeichneten Kanal erstreckt/erstrecken, wobei die Extruderschnecke/n eingangsseitig den Ausgangsstoff bzw. mehrere Ausgangsstoffe einzieht/einziehen und ein Extrudat an der Extrusionsöffnung ausdrückt/ausdrücken. Dabei erfolgt eine Durchmischung des Ausgangsstoffs oder mehrerer Ausgangsstoffe in dem Schneckenextruder. Bevorzugt sind zudem Heizmittel zum Aufheizen es Ausgangsstoffs entlang der Kavität vorgesehen. Durch die Geometrie der Extruderschnecke/n und die Betriebsparameter des Schneckenextruders können die Förderleistung des Schneckenextruders sowie der in dem Prozessraum herrschende Druck bestimmt werden.

Als Kavität wird der durch eine Ausnehmung in dem Gehäuse ausgebildete freie Raum verstanden. Die Kavität ist insofern durch Wandungen des Gehäuses begrenzt und in Ihrer Form definiert. Insbesondere ist die Kavität über den wesentlichen Teil ihrer Längenerstreckung derart ausgebildet, dass sie einen möglichst geringen Spalt zwischen der Extruderschnecke und der die Kavität begrenzenden Wandung des Gehäuses ausbildet. Der Querschnitt der Geometrie entspricht also der Außengeometrie der Extruderschnecke und ist bevorzugt kreisrund. Von dieser Geometrie wird erfindungsgemäß im Bereich der Verjüngung abgewichen.

Eine Längsrichtung definiert sich parallel zu der Rotationsachse der Extruderschnecke und spannt ein zylindrisches Koordinatensystem mit einer radialen Richtung und einer Umfangsrichtung auf, auf die in der vorliegenden Offenbarung ausschließlich Bezug genommen wird. In diesem Koordinatensystem werden geometrische Eigenschaften des gesamten Schneckenextruders sowie aller Einzelteile des Schneckenextruders beschrieben. Die Längsrichtung wird alternativ auch als axiale Richtung bezeichnet.

Eine Einlassöffnung bzw. ein Einlass erstreckt sich bevorzugt in der radialen Richtung, ist also beispielsweise als in der Kavität mündende Radialbohrung in dem Gehäuse vorgesehen. Eine Extrusionsöffnung ist bevorzugt axial ausgerichtet und umfasst beispielsweise eine Extrusionsdüse oder eine Extrusionsmatrize.

Die Lösung der Aufgabe mit dem vorbeschriebenen Schneckenextruder umfasst nun die Lehre, dass unmittelbar im Bereich der ersten Einlassöffnung eine Verjüngung des Spalts vorgesehen ist, wobei der Spalt an der ersten Einlassöffnung zumindest über einen Umfangsabschnitt eine größere radiale Erstreckung aufweist als an einem der Einlassöffnung abgewandten Ende des ersten Längenbereichs. Die Verjüngung erstreckt sich also von der ersten Einlassöffnung in der Förderrichtung des Ausgangsstoffs. Es ist so zum Einzug verhältnismäßig großer Feststoffpartikel zusätzlicher Raum an der ersten Einlassöffnung geschaffen. Insbesondere können Feststoffpartikel, die größer als die radiale Erstreckung des Spalts im restlichen Bereich der Kavität sind, im Längenbereich der Einlassöffnung nicht zwischen der Extruderschnecke und dem Gehäuse verklemmen. Über den ersten Längenbereich ist durch die Verjüngung dabei ein Druckgefällt geschaffen, sodass eine mechanische Zerkleinerung der Feststoffpartikel erfolgt. Zudem kann über den ersten Längenbereich bereits eine Erwärmung des Ausgangsstoffs, beispielsweise mittels Heizmitteln aber auch durch die am Ausgangsstoff eingetragene mechanische Arbeit, erfolgen, sodass die Zerkleinerung durch die mit der Temperaturerhöhung einhergehende Änderung mechanischer Eigenschaften vereinfacht ist oder bereits ein Aufschmelzen des Ausgangsstoffs erfolgt. Dem Schneckenextruder wird folglich durch die Verjüngung eine durch die Extruderschnecke und die Kavität selbst gebildete Zerkleinerungsvorrichtung vorgeschaltet.

Bevorzugt ist der Schneckenextruder als Doppelschneckenextruder ausgebildet, wobei die Kavität durch zwei parallel zueinander angeordneten und miteinander verbundenen Teilkavitäten gebildet ist, wobei in den Teilkavitäten jeweils eine Extruderschnecke angeordnet ist, wobei die Teikavitäten die darin angeordnete Extruderschnecke jeweils in der Umfangsrichtung im Wesentlichen umschließen, sodass zwischen der Extruderschnecke und dem Gehäuse jeweils ein Spalt ausgebildet ist und wobei die Spalte jeweils in einem sich von der ersten Einlassöffnung erstreckenden ersten Längenbereich der Kavität die Verjüngung aufweisen. Die Kavität ist dann im Querschnitt im Wesentlichen aus zwei sich überlappenden Kreisen gebildet, wobei im Bereich der Überlappung ein Spalt nicht zwischen den jeweiligen Extruderschnecken und dem Gehäuse, sondern zwischen den beiden Extruderschnecken ausgebildet ist. Die in der vorliegenden Offenbarung beschriebenen geometrischen Aspekte beziehen sich bezogen auf einen Einschneckenextruder auf die Geometrie der Kavität an sich und bezogen auf einen Doppelschneckenextruder auf die Geometrie beider Teilkavitäten entsprechend.

In einer bevorzugten Ausführungsform ist die Verjüngung über einen die erste Einlassöffnung überspannenden Umfangsabschnitt der Kavität oder der Teilkavitäten in dem ersten Längenbereich als Schräge ausgebildet. Der Querschnitt der Kavität/Teilkavitäten weicht dann im ersten Längenbereich von einer kreisrunden Geometrie ab. Die Vergrößerung der radialen Erstreckung des Spalts ist insofern der ersten Einlassöffnung zugewandt, sodass große Partikel einfach eingezogen werden können bzw. einfach in die Verjüngung hinein gelangen können. Vorteilhaft ist die Verjüngung als Schräge geometrisch einfach ausgebildet erstreckt sich nicht in einem der ersten Einlassöffnung abgewandten Umfangsabschnitt der Kavität/Teilkavitäten, sodass der ersten Einlassöffnung abgewandt kein Totraum geschaffen wird. In einer alternativen Ausführungsform ist die Kavität oder sind die Teilkavitäten im ersten Längenbereich zum Ausbilden der Verjüngung konisch ausgebildet. Die Verjüngung erfolgt dann also über den gesamten Umfang gleichmäßig, wobei er Querschnitt der Kavität/Teilkavitäten über den gesamten ersten Längenbereich kreisrund ist.

In einer weiteren bevorzugten Ausführungsform ist/sind der Spalt oder die Spalte in einem sich zwischen dem ersten Längenbereich und der Extrusionsöffnung erstreckenden zweiten Längenbereich zylindrisch ausgebildet. Die Kavität/Teilkavitäten ist/sind also über den zweiten Längenbereich im Querschnitt kreisrund und mit gleichbleibendem Außendurchmesser ausgebildet. Auf diese Weise wird in dem zweiten Längenbereich ein gleichbleibend enger Spalt geschaffen und so eine effiziente Förderung des Ausgangsstoffs bzw. Extrudats mit geringem Totraum zwischen Extruderschnecke/n und Gehäuse ermöglicht.

In einer besonders bevorzugten Ausführungsform ist das Gehäuse aus zumindest zwei jeweils einen Umfangsabschnitt der Kavität oder der Teilkavitäten ausbildenden Gehäuseschalen gebildet. Das Gehäuse ist dann zur Revision, Reinigung und/oder Wartung der Kavität bzw. der Extruderschnecke/n besonders einfach öffenbar. Besonders bevorzugt sind die Gehäuseschalen dabei gegeneinander verschwenkbar aufgehangen, sodass zumindest eine Gehäuseschale von zumindest einer weiteren Gehäuseschale weggeschwenkt werden kann, um ein besonders komfortables Öffnen zu ermöglichen.

In einer Ausgestaltung dieser Ausführungsform weist/weisen der Spalt oder die Spalte an genau einer Gehäuseschale die Verjüngung auf. Es ist dann der Vorteil erreicht, dass lediglich eine der Gehäuseschalen mit einer von der zylindrischen Geometrie abweichenden Kavitäts-/Teilkavitätsgeometrie ausgebildet werden muss und der entsprechend größere Herstellungsaufwand lediglich bei einer Gehäuseschale anfällt.

In einer weiteren Ausgestaltung der vorgenannten Ausführungsform weist zumindest eine Gehäuseschale eine Ausnehmung und einen in der Ausnehmung einliegenden Einsatz auf, wobei der Umfangsabschnitt der Kavität an dem Einsatz ausgebildet ist. Der Einsatz ist dann als einziges Bauteil des Gehäuses ausgebildet, das mit den Ausgangsstoffen/dem Extrudat in Berührung kommt. Vorteilhaft ist der Einsatz dabei aus dem restlichen Gehäuse entnehmbar und reinigbar, beispielsweise in einem Autoklaven. Der Schneckenextruder kann dann beispielsweise sicher und einfach für reine oder hochreine Anwendungen, beispielsweise in der Pharmazie, verwendet werden.

In einer Ausführungsform ist/sind die Extruderschnecke/n mit einem Außendurchmesser kleiner/gleich 12 Millimeter ausgebildet. Bei derart kleinen Außendurchmessern werden die Vorteile der Erfindung in besonderem Maße dahingehend verwirklicht, dass ohne die Verjüngung nicht zu verarbeitende Granulate mit dem Schneckenextruder verarbeitet werden können. Bei einem Außendurchmesser von kleiner als 12 Millimeter wird zum effizienten Betrieb des Schneckenextruders üblicherweise ein Spaltmaß vorgesehen, bei dem Feststoffpartikel, die größer als beispielsweise bei einem üblichen Pulver sind, zwischen der/den Extruderschnecke/n und dem Gehäuse eingeklemmt werden und die Extruderschnecke/n so abbremsen und letztlich verstopfen. Durch das Vorsehen der Verjüngung werden gegenüber einem Pulver größere Granulatpartikel eingezogen und in dem ersten Längenbereich zerkleinert und/oder bereits aufgeschmolzen. Ein Pulver wird gemäß der vorliegenden Offenbarung beispielsweise mit einem durchschnittlichen Korndurchmesser einiger Mikrometer bis zu einigen Hundert Mikrometern, beispielsweise 1 bis 500 Mikrometer, verstanden. Ein Granulat weist nach vorliegendem Verständnis einen mittleren Korndurchmesser im Bereich von 0,5 bis 3 Millimeter auf.

Bevorzugt weist/weisen der Spalt oder die Spalte, insbesondere in dem zweiten Längenbereich, eine minimale radiale Erstreckung kleiner als 3 Millimeter auf. Dabei ist die maximale radiale Erstreckung des Spalts im Bereich der Verjüngung bevorzugt größer/gleich 3 Millimeter. Es ist so ein besonders kleiner und kompakter Schneckenextruder mit der Befähigung zum Verarbeiten eines Standardgranulats geschaffen. Dabei ermöglicht die Verjüngung ein Einziehen des Standardgranulats einhergehend mit einer Zerkleinerung /einem Aufschmelzen, obwohl die Geometrie des restlichen Schneckenextruders, insbesondere in dem zweiten Längenbereich, an sich eine Verarbeitung derart großer Feststoffpartikel ohne die Verjüngung nicht ermöglichen würde. Ein Standardgranulat weist nach vorliegendem Verständnis Korngrößen bis zu 3 Millimeter auf.

In einer weiteren Ausführungsform weist der Schneckenextruder zumindest eine in dem zweiten Längenbereich angeordnete zweite Einlassöffnung zum Einfüllen eines zweiten Ausgangsstoffs in die Kavität auf. Eine solche zweite Einlassöffnung ist beispielsweise zum Einfüllen einer Flüssigkeit oder eines Feststoffs mit einer gegenüber dem ersten Ausgangsstoff geringeren mittleren Korngröße in die Kavität vorgesehen. Der erste Ausgangsstoff kann dann in dem ersten Längenbereich zerkleinert und/oder aufgeschmolzen werden und wird anschließend mit dem zweiten Ausgangsstoff vermischt. Bevorzugt ist die zweite Einlassöffnung unmittelbar benachbart zu dem ersten Längenbereich angeordnet, also in Förderrichtung unmittelbar hinter einem Übergang zwischen dem erstem Längenbereich und dem zweiten Längenbereich.

In noch einer weiteren Ausführungsform weist der Schneckenextruder zumindest eine Absaugöffnung zum hydraulischen Verbinden der Kavität mit einer Vakuumpumpe auf. Die Kavität ist dann mittels einer an der Absaugöffnung angeschlossenen Vakuumpumpe evakuierbar. Insbesondere werden dann Gase, die etwa beim Aufschmelzen eines Ausgangsstoffs emittiert werden, abgesaugt. Die Absaugöffnung ist bevorzugt in dem zweiten Längenbereich angeordnet, bevorzugt in Förderrichtung hinter der zweiten Einlassöffnung.

Die Aufgabe wird weiterhin gelöst durch ein Gehäuse für einen vorbeschriebenen Schneckenextruder. Insbesondere ist an dem Gehäuse die Kavität mit der Verjüngung, die erste Einlassöffnung, die zweite Einlassöffnung, die Absaugöffnung und/oder die Extrusionsöffnung ausgebildet, die jeweils den vorbeschriebenen Merkmalen entsprechend ausgebildet sind. Die Kavität ist dabei für eine einzelne Extruderschnecke oder mit zwei Teilkavitäten ausgebildet. Besonders bevorzugt ist das Gehäuse aus zumindest zwei jeweils einen Umfangsabschnitt der Kavität oder der Teilkavitäten ausbildenden Gehäuseschalen gebildet, die besonders bevorzugt aneinander in verschwenkbarer Weise aufgehangen sind. Mit dem Gehäuse sind die bezüglich des Schneckenextruders vorbeschriebenen Vorteile jeweils entsprechend ermöglicht bzw. erreicht.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine perspektivische Ansicht eines Schneckenextruders gemäß einem bevorzugten Ausführungsbeispiel der Erfindung;
- Fig. 2: eine perspektivische Ansicht eines Einsatzes für eine Gehäuseschale des Schneckenextruders gemäß Fig 1 mit daran ausgebildetem Umfangsabschnitt einer Kavität; und
- Fig. 3: eine Querschnittsansicht des Einsatzes gemäß Fig. 2.

### Detaillierte Beschreibung der Zeichnungen

Die beschriebenen Ausführungsbeispiele sind lediglich Beispiele, die im Rahmen der Ansprüche auf vielfältige Weise modifiziert und/oder ergänzt werden können.

Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

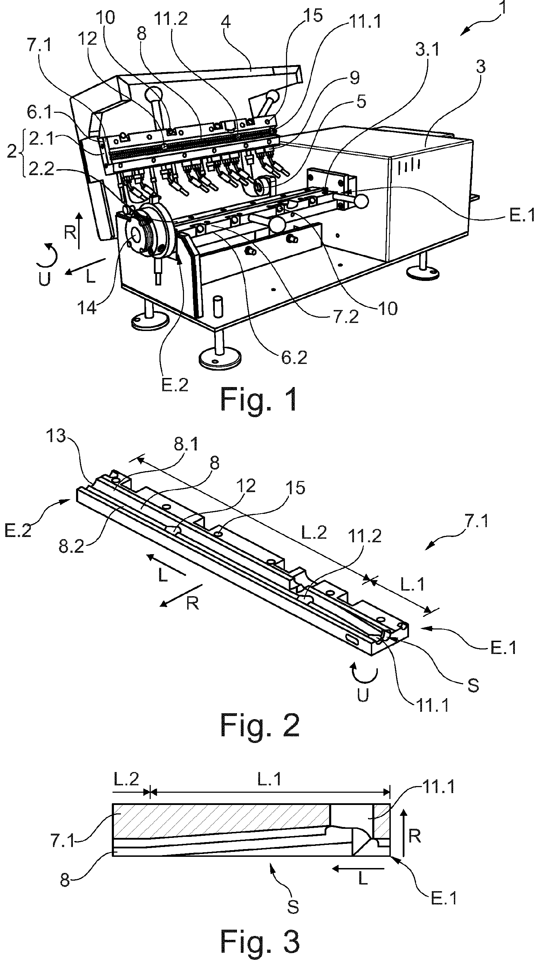

Figur 1 zeigt einen Schneckenextruder 1 mit einem aus einer ersten Gehäuseschale 2.1 und einer zweiten Gehäuseschale 2.2 gebildeten Gehäuse 2 sowie mit einer Antriebseinheit 3 und einer Ummantelung 4. Die Gehäuseschalen 2.1, 2.2 sind über Gelenke 5 gegeneinander verschwenkbar aneinander gelagert, sodass sie in einem geschlossenen Zustand aufeinander aufliegen und an Bohrungen 15 miteinander verschraubt werden können. Die Gehäuseschalen 2.1, 2.2 weisen jeweils rechteckige Ausnehmungen 6.1, 6.2 auf, in denen ein oberer Einsatz 7.1 bzw. ein unterer Einsatz 7.2 einliegen und mit Befestigungsmitteln 10 befestigt sind. An den Einsätzen 7.1, 7.2 sind jeweils Umfangsabschnitte einer Kavität 8 ausgebildet, wie mit Bezug zu Figur 2 und Figur 3 näher erläutert wird. Die Kavität 8 erstreck sich in einer Längsrichtung L, anhand der ein zylindrisches Koordinatensystem mit einer radialen Richtung R und einem Umfangsrichtung U definiert ist, und dient zum koaxialen Umschließen von nicht dargestellten Extruderschnecken, die an Aufnahmen 3.1 des Antriebs 3 gelagert werden. Der Schneckenextruder 1 weist weiterhin mehrere Heizmittel 9 entlang seiner Längserstreckung auf.

Figur 2 zeigt einen oberen Einsatz 7.1 des Schneckenextruder 1 in perspektivischer Ansicht, wobei Figur 3 einen Querschnitt desselben oberen Einsatzes 7.1 zeigt. Die Kavität 8 ist durch eine erste Teilkavität 8.1 und eine parallel dazu angeordnete zweite Teilkavität 8.2 gebildet, wobei die Teilkavitäten 8.1, 8.2 jeweils zum Aufnehmen einer Extruderschnecke vorgesehen sind. Die Querschnitte der Teilkavitäten 8.1, 8.2 überlappen miteinander, sodass eine durchgehende Kavität 8 gebildet ist und in den Teilkavitäten 8.1, 8.2 angeordnete Schnecken unmittelbar benachbart zueinander liegen. Der obere Einsatz 7.1 weist in einem ersten Längenbereich L.1 eine Schräge S auf, die konvexen Wandungen der Teilkavitäten 8.1, 8.2 verlaufen also nicht parallel zu der Längsrichtung L, sondern schräg dazu. An einem vorderen Ende E.1 des oberen Einsatzes 7.1 weist die Kavität 8 somit einen größeren Querschnitt auf als in einem zweiten Längenbereich L.2, in dem die Wandungen der Teilkavitäten 8.1, 8.2 parallel zu der Längsrichtung L verlaufen, sodass sich ein entsprechend größerer Spalt zwischen Wandung und Extruderschnecke ergibt.

An dem vorderen Ende E.1 ist eine erste Einlassöffnung 11.1 als radiale Bohrung durch die erste Gehäuseschale 2.1 vorgesehen. Die erste Einlassöffnung 11.1 dient zum Einfüllen eines zu extrudierenden ersten Ausgangsstoffs. Weiterhin ist unmittelbar hinter dem Übergang zwischen erstem Längenbereich L.1 und dem zweiten Längenbereich L.2 eine ebenfalls als Radialbohrung ausgebildete zweite Einlassöffnung 11.2 zum Einfüllen eines zweiten Ausgangsstoffs in die Kavität 8 vorgesehen. In dem zweiten Längenbereich L.2 ist auch eine ebenfalls als Radialbohrung ausgebildete Absaugöffnung 12 angeordnet, über die die Kavität 8 mittels einer Vakuumpumpe entgast werden kann. Letztlich ist an einem hinteren Ende E.2 in axialer Ausrichtung eine Extrusionsöffnung 13 an der Kavität 8 vorgesehen. An der Extrusionsöffnung kann beispielsweise, wie in Figur 1 dargestellt, eine Extrusionsdüse 14 angeordnet sein.

### Bezugszeichenliste

- 1: Schneckenextruder
- 2: Gehäuse
- 2.1: erste Gehäuseschale
- 2.2: zweite Gehäuseschale
- 3: Antriebseinheit
- 4: Ummantelung
- 5: Gelenk
- 6.1: Ausnehmung
- 6.2: Ausnehmung
- 7.1: oberer Einsatz
- 7.2: unterer Einsatz
- 8: Kavität
- 8.1: erste Teilkavität
- 8.2: zweite Teilkavität
- 9: Heizmittel
- 10: Befestigungsmittel
- 11.1: erste Einlassöffnung
- 11.2: zweite Einlassöffnung
- 12: Absaugöffnung
- 13: Extrusionsöffnung
- 14: Extrusionsdüse
- 15: Bohrung
- E.1: vorderes Ende
- E.2: hinteres Ende
- L: Längsrichtung
- L.1: erster Längenbereich
- L.2: zweiter Längenbereich
- R: radiale Richtung
- S: Schräge
- U: Umfangsrichtung

## Patentansprüche

1. Schneckenextruder (1) zum Extrudieren eines ersten Ausgangsstoffs, aufweisend
eine in einem Gehäuse (2) ausgebildete Kavität (8);
zumindest eine in der Kavität (8) angeordnete Extruderschnecke;
eine an einem vorderen Ende (E.1) der Kavität (8) angeordnete erste Einlassöffnung (11.1) zum Einfüllen des zu extrudierenden ersten Ausgangsstoffs in die Kavität (8); und
eine an einem hinteren Ende (E.2) der Kavität (8) angeordnete Extrusionsöffnung (13);
wobei die Kavität (8) die zumindest eine Extruderschnecke in der Umfangsrichtung (U) im Wesentlichen umschließt, sodass zwischen der zumindest einen Extruderschnecke und dem Gehäuse (2) ein sich radial erstreckender Spalt ausgebildet ist; und
wobei der Spalt in einem sich von der ersten Einlassöffnung (11.1) erstreckenden ersten Längenbereich (L.1) der Kavität (8) eine Verjüngung aufweist.

2. Schneckenextruder (1) nach Anspruch 1, ausgebildet als Doppelschneckenextruder;
wobei die Kavität (8) durch zwei parallel zueinander angeordneten und miteinander verbundenen Teilkavitäten (8.1, 8.2) gebildet ist;
wobei in den Teilkavitäten (8.1, 8.2) jeweils eine Extruderschnecke angeordnet ist;
wobei die Teikavitäten (8.1, 8.2) die darin angeordnete Extruderschnecke jeweils in der Umfangsrichtung (U) im Wesentlichen umschließen, sodass zwischen der Extruderschnecke und dem Gehäuse (2) jeweils ein Spalt ausgebildet ist, und
wobei die Spalte jeweils in einem sich von der ersten Einlassöffnung (11.1) erstreckenden ersten Längenbereich (L.1) der Kavität (8) die Verjüngung aufweisen.

3. Schneckenextruder (1) nach Anspruch 1 oder 2, wobei die Verjüngung über einen die erste Einlassöffnung (11.) überspannenden Umfangsabschnitt der Kavität (8) oder der Teilkavitäten (8.1, 8.2) in dem ersten Längenbereich (L.1) als Schräge (S) ausgebildet ist.

4. Schneckenextruder (1) nach Anspruch 1 oder 2, wobei die Kavität (8) oder die Teilkavitäten (8.1, 8.2) im ersten Längenbereich (L.1) zum Ausbilden der Verjüngung konisch ausgebildet ist/sind.

5. Schneckenextruder (1) nach einem der vorhergehenden Ansprüche, wobei der Spalt oder die Spalte in einem sich zwischen dem ersten Längenbereich (L.1) und der Extrusionsöffnung (13) erstreckenden zweiten Längenbereich (L.2) zylindrisch ausgebildet ist/sind.

6. Schneckenextruder (1) nach einem der vorhergehenden Ansprüche, wobei das Gehäuse (2) aus zumindest zwei jeweils einen Umfangsabschnitt der Kavität (8) oder der Teilkavitäten (8.1, 8.2) ausbildenden Gehäuseschalen (2.1, 2.2) gebildet ist.

7. Schneckenextruder (1) nach Anspruch 6, wobei der Spalt oder die Spalte an genau einer Gehäuseschale (2.1, 2.2) die Verjüngung aufweist/aufweisen.

8. Schneckenextruder (1) nach Anspruch 6 oder 7, wobei zumindest eine Gehäuseschale (2.1, 2.2) eine Ausnehmung (6.1, 6.2) und einen in der Ausnehmung (6.1, 6.2) einliegenden Einsatz (7.1, 7.2) aufweist, wobei der Umfangsabschnitt der Kavität (8) an dem Einsatz (7.1, 7.2) ausgebildet ist.

9. Schneckenextruder (1) nach einem der vorhergehenden Ansprüche, wobei die Extruderschnecke/n mit einem Außendurchmesser kleiner/gleich 12 Millimeter ausgebildet ist/sind.

10. Schneckenextruder (1) nach einem der vorhergehenden Ansprüche, wobei der Spalt oder die Spalte, insbesondere in dem zweiten Längenbereich (L.2), eine minimale radiale Erstreckung kleiner als 3 Millimeter aufweist/aufweisen.

11. Schneckenextruder (1) nach einem der vorhergehenden Ansprüche, aufweisend zumindest eine in dem zweiten Längenbereich (L.2) angeordnete zweite Einlassöffnung (11.2) zum Einfüllen eines zweiten Ausgangsstoffs in die Kavität (8).

12. Schneckenextruder (1) nach einem der vorhergehenden Ansprüche, aufweisend zumindest eine Absaugöffnung (12) zum hydraulischen Verbinden der Kavität (8) mit einer Vakuumpumpe.

13. Gehäuse (2) für einen Schneckenextruder (1) nach einem der vorhergehenden Ansprüche.
